# EUROPEAN PATENT SPECIFICATION

(11) **EP 3 521 710 B1**
(45) Date of publication and mention of the grant of the patent: **06.04.2022**
(21) Application number: 18845961.4
(22) Date of filing: 15.01.2018
(51) Int. Cl.: F24F 1/00, F24F 13/28, F24F 13/20, F24F 13/00, F24F 1/0073, B01D 46/00, B01D 46/26, B01D 46/24

(54) **AIR TREATMENT MODULE AND AIR CONDITIONER**
LUFTBEHANDLUNGSMODUL UND KLIMAANLAGE
MODULE DE TRAITEMENT D'AIR ET CLIMATISEUR

(30) Priority: 18.08.2017 CN 201710711685
(43) Date of publication of application: 07.08.2019
(73) Proprietor: GD Midea Air-Conditioning Equipment Co., Ltd., Foshan, Guangdong 528311 (CN)
(72) Inventor: YAN, Changlin, Foshan City Guangdong 528311 (CN); CHEN, Liangrui, Foshan City Guangdong 528311 (CN); YUAN, Hongliang, Foshan City Guangdong 528311 (CN)
(74) Representative: RGTH
(86) International application number: PCT/CN2018/072680
(87) International publication number: WO 2019/033698

(56) References cited:
- EP-A1- 3 163 203
- CN-A- 104 990 137
- CN-A- 105 423 529
- CN-A- 106 871 263
- CN-A- 107 327 938
- CN-U- 204 006 378
- CN-U- 207 094 808
- CN-Y- 201 350 383
- JP-A- 2007 064 607
- KR-A- 20150 140 964

## Description

### FIELD

The present disclosure generally relates to the technical field of household appliances, and more particularly relates to an air processing module and an air conditioner.

### BACKGROUND

As people's living standards continue to improve, so on the quality of life requirements continue to increase. Now the heat exchange air conditioner with single function cannot satisfy users' demands. Therefore, air conditioners with air processing function continue to appear on the market. However, in the current air conditioners, the air processing module is fixedly mounted in the air conditioner, it is inconvenient to repair or change the air processing module .

EP 3 163 203A1 discloses an air freshener comprising a body case forming a filter installation opening in one side thereof; a filter housing disposed in the body case; a drawer comprising a frame forming therein a drawer opening, through which air passes, and a filter cover coupled to the frame for covering the filter installation opening; and a filter module separably located on the frame for filtering the air that has passed through the drawer opening, wherein the drawer is configured to be withdrawn from an inner space of the filter housing through the filter installation opening.

### SUMMARY

The present invention provides an air processing module, which aims to solve the problem of that the changing of the air processing module in air conditioner is inconvenient.

In order to realize the above object, the air processing module according to claim 1 is provided. The dependent claims 2-15 define the features of the preferred embodiments of the invention. The air processing module includes:
a housing, including a base plate and a coaming formed by a periphery of the base plate extending upwardly, the coaming defines an air inlet; and
an air processing assembly, mounted in the housing, the air processing assembly includes a filter canister, a support plate, and a mounting plate, the filter canister is detachably mounted to the support plate, the support plate is rotatably mounted to the mounting plate, the mounting plate is slidably mounted in the housing along the inside and the outside of the air inlet.

Preferably, the support plate is rotatably mounted to the mounting plate through a bearing.

Preferably, the bearing is mounted to the mounting plate, a bottom of the support plate defines a spindle passing through an inner hole of the bearing; and the end of the spindle connecting to the support plate defines a resisting ring protruding towards the side direction.

Preferably, at least one guide pulley is mounted on the mounting plate, the guide pulley resists the bottom of the support plate.

Preferably, the guide pulley is a flat pulley, and the axis of the guide pulley extends along the radial direction of the support plate.

Preferably, the bottom of the support plate defines a first guide groove matching to the guide pulley, and the first guide groove is arranged along the circumferential direction of the support plate.

Preferably, the guide pulley is a gear wheel, the bottom of the first guide groove defines rack engaged with the guide pulley.

Preferably, a periphery of the support plate defines a rack, a first driving motor is mounted on the mounting plate, a shaft of the driving motor is provided with a first driving gear, the first driving gear engages with the rack of the support plate.

Preferably, the mounting plate is mounted on the base plate, and the mounting plate matches to the base plate through slot rail fit.

Preferably, the base plate of the housing defines a connecting block, the connecting block defines a sliding groove, the bottom of the mounting plate defines a protruding rail matching to the sliding groove.

Preferably, the base plate of the housing defines a roller, the roller resists the bottom of the mounting plate.

Preferably, there are a plurality of rollers which are uniformly arranged at two sides of the sliding groove.

Preferably, the roller is a flat roller, and the roller is mounted to the base plate through a mounting base.

Preferably, the roller is a gear wheel, and the bottom of the mounting plate defines a rack engaged with the roller.

Preferably, the bottom of the mounting plate defines a second guide groove, the rack is defined at the bottom of the second guide groove.

Preferably, the mounting plate includes side edges located at two sides of the protruding rail, one of the side edges of the mounting plate defines a rack, the base plate of the housing is provided with a second driving motor, a shaft of the second driving motor is provided with a second driving gear, the second driving gear engages with the rack on the mounting plate.

The present invention further provides an air conditioner, which includes an indoor unit, an outdoor unit, and an air processing module, the air processing module is mounted to the indoor unit and/or the outdoor unit, and the air processing module includes:
a housing, including a base plate and a coaming formed by a periphery of the base plate extending upwardly, the coaming defines an air inlet; and
an air processing assembly, mounted in the housing, the air processing assembly includes a filter canister, a support plate, and a mounting plate, the filter canister is detachably mounted to the support plate, the support plate is rotatably mounted to the mounting plate, the mounting plate is slidably mounted in the housing along the inside and the outside of the air inlet.

The technical proposal of the present can adjust air quality to satisfy user's requirement by setting the air processing module. The air processing module includes one housing, the housing is internally provided with the filter canister, and the coaming of the housing defines the air inlet. When air flows into the housing through the air inlet, the air is filtered by a filter surface of the filter canister facing the air inlet, then the filter air is exhaust to realize the air purification effect.

Furthermore, the filter canister and the support plate are rotatably mounted to the mounting plate (that is, the filter canister and the support plate are mounted in the housing), thus, when the filter screen of the filter canister facing the air inlet is attached with heavy accumulation of dirt or stains after filtering for a long time, the filter canister can rotate periodically, allowing the cleaner filter surface (the filter surface of the filter canister opposite to the air inlet or adjacent to the air inlet) to face the air inlet. As the filter surface with lower filter effect is replaced, the filter strength and using effect of the filter canister are improved.

In addition, the mounting plate is slidably mounted in the housing, as such, after the filter canister is used for an overlong time, the filter canister can directly slide out of the housing without disassembling the housing, then the filter canister can be cleaned and replaced. Furthermore, user can conveniently clean, repair, or replace the filter canister.

### BRIEF DESCRIPTION OF THE DRAWINGS

To better illustrate the technical solutions that are reflected in various embodiments according to this invention the accompanying drawings intended for the description of the embodiments herein will now be briefly described, it is evident that the accompanying drawings listed in the following description show merely some embodiments according to this invention.
FIG. 1 is a partial cross section diagram of the air processing module of the present invention;
FIG. 2 is top plan view of the cross section of the air processing module of the present invention according to an exemplary embodiment;
FIG. 3 is a front elevation view of the air processing module in FIG. 1 according to an exemplary embodiment;
FIG. 4 is an enlarged diagram of portion A in FIG. 3;
FIG. 5 is a cross section diagram of the air processing module of the present invention from another view;
FIG. 6 is an enlarged diagram of portion B in FIG. 5;
FIG. 7 is a structure diagram of the support plate;
FIG. 8 is top plan view of the cross section of the air processing module of the present invention according to another exemplary embodiment;
FIG. 9 is a front elevation view of the air processing module in FIG. 1 according to another exemplary embodiment;
FIG. 10 is an enlarged diagram of portion C in FIG. 9;
FIG. 11 is an enlarged diagram of portion D in FIG. 9.

Labels illustration for drawings:

| Label | Name | Label | Name |
|---|---|---|---|
| 10 | air processing module | 20 | housing |
| 21 | base plate | 211 | connecting block |
| 212 | sliding groove | 213 | protruding rail |
| 214 | roller | 22 | coaming |
| 221 | air inlet | 30 | air processing assembly |
| 31 | filter canister | 32 | support plate |
| 321 | first guide groove | 33 | mounting plate |
| 331 | bearing | 332 | guide pulley |
| 333 | second guide groove | 40 | resisting ring |
| 50 | first driving motor | 51 | first driving gear |
| 60 | second driving motor | 61 | second driving gear |
| 70 | blower | 80 | mounting base |

The realization of the aim, functional characteristics, advantages of the present invention are further described specifically with reference to the accompanying drawings and embodiments.

### DETAILED DESCRIPTION

The technical solutions of the embodiments of the present invention will be clearly and completely described in the following with reference to the accompanying drawings. It is obvious that the embodiments to be described are only a part rather than all of the embodiments of the present invention which is solely defined in the appended claims.

It is to be understood that, all of the directional instructions in the exemplary embodiments of the present disclosure (such as top, down, left, right, front, back......) can only be used for explaining relative position relations, moving condition of the elements under a special form (referring to figures), and so on, if the special form changes, the directional instructions changes accordingly.

In addition, the descriptions, such as the "first" , the "second" in the present disclosure, can only be used for describing the aim of description, and cannot be understood as indicating or suggestting relative importance or impliedly indicating the number of the indicated technical character. Therefore, the character indicated by the " first", the "second" can express or impliedly include at least one character. In addition, the technical proposal of each exemplary embodiment can be combined with each other, however the technical proposal must base on that the ordinary skill in that art can realize the technical proposal, when the combination of the technical proposals occurs contradiction or cannot realize, it should consider that the combination of the technical proposals does not existed, and is not contained in the protection scope required by the present disclosure.

The present invention provides an air processing module, and an air conditioner having the air processing module. The air conditioner can be a wall-mounted split machine, a wall-mounted all-in-one machine, a floor split machine, a floor all-in-one machine, etc. The present disclosure takes the split machine as an example, in detail, the present disclosure takes a cabinet as an example.

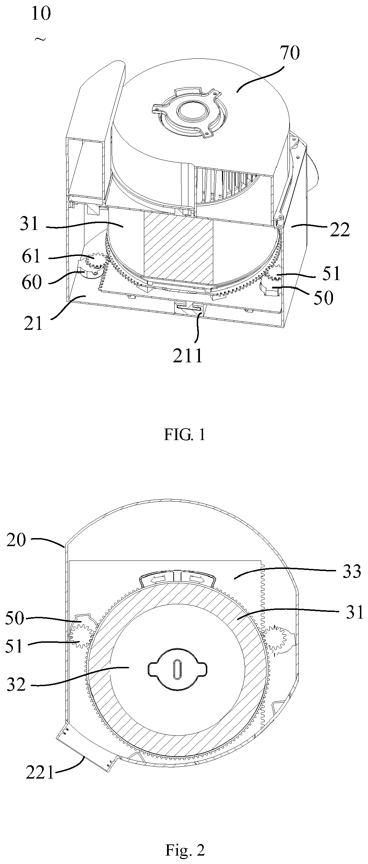

Referring to FIGs. 1-3, 5-6 and 9-10, the exemplary embodiment of the present invention provides an air processing module 10, which includes a housing 20 and an air processing assembly 30. The housing 20 includes a base plate 21 and a coaming 22 formed by a periphery of the base plate 21 extending upwardly, the coaming 22 defines an air inlet 221. The air processing assembly 30 is mounted in the housing 20. The air processing assembly 30 includes a filter canister 31, a support plate 32, and a mounting plate 33, the filter canister 31 is detachably mounted to the support plate 32, the support plate 32 is rotatably mounted to the mounting plate 33, the mounting plate 33 is slidably mounted in the housing 20 along the inside and the outside of the air inlet 221.

In detail, the air processing module 10 includes the housing 20, the housing 20 includes a base plate 21, and the periphery of the base plate 21 extends upwardly to form the coaming 22, that is, the up end of the housing 20 has an opening structure, and the coaming 22 defines the air inlet 221. In addition, the housing 20 is internally provided with the filer canister 31, the filter canister 31 is detachably mounted to the support plate 32, the support plate 32 is rotatably mounted to the mounting plate 33, the mounting plate 33 is slidably mounted in the housing 20, and can slide out of or slide into the housing 20 through the air inlet 221. It should be noted that, if the air inlet 221 has a large aperture, the mounting plate 33 can slide out of or slide into the housing 20 through the air inlet 221 directly; if the air inlet 221 has a small aperture (the mounting plate cannot slide out of or slide into the housing 20 through the air inlet directly), a sub-coaming having the air inlet 221 can be set to detachably connect to the housing, such before making the mounting plate 33 to slide out of or slide into the housing 20, the sub-coaming is separated from the housing 20, such the mounting plate 33 can slide out of or slide into the housing 20. Of course, other sub-coaming (a sub-coaming that does not define the air inlet 221) can be set to detachably connect the housing 20, and when the sub-coaming is open, the mounting plate 33 can slide out off or slide into the housing 20 through the opening formed by opening the sub-coaming. It is to be understood that, when air flows into the housing through the air inlet 221, the filter canister 31 is configured to filter the air.

The detachable connection between the filter canister 31 and the support plate 32 can be that: the filter canister 31 is mounted on the support plate 32 through a scrcw; or the filter canister 31 is mounted at the support plate 32 through clamping; or, the support plate 32 defines a connecting part, the filter canister 31 directly sleeves on the connecting part.

There are a plurality of modes for rotatably mounting the filter canister 31 on the support plate 32. For example, the inner of the filter canister 31 connects with a spindle arranged along the axis of the filter canister 31, and the support plate 32 defines a bearing matching with the spindle, the filter canister 31 can be rotatably mounted with the support plate 32 through the matching of the spindle and the bearing. Or, the inner of the filter canister 31 connects a spindle arranged along the axis of the filter canister 31, and the support plate 32 defines a drive motor, the drive spindle of the drive motor matches with the spindle of the filter canister 31 to bring the spindle connected with the filter canister 31, thus the filter canister 31 can be rotatably mounted on the base plate 21 of the housing 20. Or, an edge of a port formed at the bottom of the filter canister 31 defines a protruding rail (or a sliding groove), and the base plate 21 defines a sliding (or a protruding rail) accordingly, the filter canister 31 can be rotatably mounted on the support plate 32 through the matching of the protruding rail and the sliding groove.

And, the mounting plate 33 is slidably mounted in the housing 20, its mounting mode can be that the mounting plate 33 is slidably mounted on the base plate 21 of the housing 20, or the mounting plate 33 is slidably mounted on the coaming 22 of the housing 20.

When the mounting plate 33 is slidably mounted on the base plate 21 of the housing 20, its mounting mode can be that: the bottom of the mounting plate 33 defines a protruding rail 213 (or a sliding groove 212), the base plate 21 of the housing 20 defines a sliding groove 212 matching with the protruding rail 213 (or defines a protruding rail 213 matching with the protruding rail 213). The filter canister 31 is mounted on the mounting plate 33, and the filter canister 31 is slidably mounted in the housing 20 through the matching of the protruding rail 213 and the sliding groove 212. It is to be noted that, as the mounting plate 33 should slide out of the housing 20 through the air inlet 221 of the housing 20, thus, the protruding rail 213 and the sliding groove 212 preferably extend along the axis of the air inlet 221, that is, extend along the orientation of the air inlet 221.

Or, the bottom of the mounting plate 33 defines a sliding sleeve (or a sliding rod), the base plate 21 of the housing 20 defines a sliding rod matching with the sliding sleeve (or defines a sliding sleeve matching with the sliding rod). The filter canister 31 is mounted on the mounting plate 33, then the mounting plate 33 can be slidably mounted in the housing 20 through the matching of the sliding sleeve and the sliding rod. It should be noted that, as the mounting plate 33 should slide out of the housing 20 through the air inlet 221 of the housing 20, the sliding rod preferably extends along the axis of the air inlet 221, that is, extends along the orientation of the air inlet 221. It should also be noted that, when a cross section of the sliding rod is circular, the quantity of the sliding rod in the exemplary embodiment is plural, and the plurality of the sliding rods all extend along the same direction, and all extend along the orientation of the air inlet 221.

When the filter canister 31 is slidably mounted on the coaming 22 of the housing 20, and the mounting mode can be that: two coamings 22 adjacent to the air inlet 221 both define a sliding groove. Two corresponding sides of the mounting plate 33 are inserted into the sliding grooves from the ends of the sliding grooves directly, such the filter canister 31 is slidably matched with the coamings 22. And, the filter canister 31 is mounted on the mounting plate 33, then the mounting plate 33 is slidably mounted in the housing 20. It should be noted that, as the mounting plate 33 slides out of the housing 20 through the air inlet 221 of the housing 20, the sliding groove extends along the axis of the air inlet 221, that is, extends along the orientation of the air inlet 221.

Or, the two coamings 22 of the housing 20 adjacent to the air inlet 221 both define a sliding rod (or a sliding sleeve), two corresponding sides of the mounting plate 33 both define a sliding sleeve matching with the sliding rod (or both define a sliding rod matching with the sliding sleeve). The filter canister 31 is mounted on the mounting plate 33, then the mounting plate 33 can be slidably mounted in the housing 20 through the matching of the sliding sleeve and the sliding rod. It should be noted that, as the mounting plate 33 should slide out of the housing 20 through the air inlet 221 of the housing 20, the sliding rod preferably extends along the axis of the air inlet 221, that is, extends towards the orientation of the air inlet 221.

Preferably, the mounting plate 33 is mounted at the base plate 21 of the housing 21, and the mounting plate 33 matches with the base plate 21 through the sliding groove 212 and the protruding rail 213. In the exemplary embodiment, the protruding rail 213 is defined at the symmetry mid-line of the bottom of the mounting plate 33.

In the exemplary embodiment, it should also be noted that, a blower 70 is defined at the top end of the housing 20, thus the blower 70 can cover the opening at the top end of the housing 20. The blower 70 defines a suction opening, when the filter canister 31 is mounted in the housing 20, the bottom end of filter canister 31 resists the support plate 32, the top end of the filter canister 31 contracts with the suction opening of the blower 70. It should be noted that, the top end and the bottom end of the filter canister 31 are both closed (the top end of the filter canister 31 resists the periphery of the suction opening in a seal type, and then contracts with the suction opening of the blower 70), therefore, the air from the air inlet 221 are all filtered by the filter screen of the filter canister 31, and then filtered air flows to the top end of the filter canister 31 (the suction opening of the blower 70), the blower 70 draws off the filter air. In order to improve the filtration intensity, the filter screen of the filter canister 31 can be a high efficiency air particle (HEAP) screen.

In the technical proposal of the exemplary embodiment of the present invention, the quality of the air can be adjusted through setting the air processing module 10, to satisfy user's requirement. The air processing module 10 includes one housing 20, the housing 20 is internally provided with the filter canister 31, and the coaming 22 of the housing defines the air inlet 221. when the air flows into the hosing 20 through the air inlet 221, the air is filter by the filtering surface of the filter canister 31 facing the air inlet 221, and then the filtered air is exhausted out to realize the air purification effect.

The filter canister 31 and the support plate 32 are rotatably mounted on the mounting plate 33 (that is, the filter canister 31 and the support plate 32 are mounted in the housing 20). When the filter screen of the filter canister 31 facing the air inlet 221 is attached with heavy accumulation of dirt or stains after filtering for a long time, the filter canister 31 can rotate periodically, allowing the cleaner filter surface (the filter surface of the filter canister 31 opposite to the air inlet 221 or adjacent to the air inlet 221) to face the air inlet 221. As the filter surface with lower filter effect is replaced to improve the filter strength and using effect of the filter canister 31.

In addition, the mounting plate 33 is slidably mounted in the housing 20, therefore, when the filter canister 31 is used for an overlong time, the filter canister 31 can slide out of the housing 20 through the air inlet 221 of the housing 20 directly, without disassembling the housing 20, then the filter canister 21 can be cleaned and changed. Therefore, it is convenient to clean, repair, or change the filter canister.

Furthermore, the support plate 32 is rotatably mounted at the mounting plate 33 through the bearing 331.

In detail, the bottom of the support plate 32 defines a spindle, the base plate 21 of the housing 20 defines a bearing 331, the spindle of the support plate 32 is inserted in the inner hole of the bearing 331, such the support plate 32 can be rotatably mounted with the base plate 21 of the housing 20. Or, the bottom of the support plate 32 defines a bearing 331, the base plate 21 of the housing 20 defines a spindle, the spindle of the base plate 21 of the housing 20 is inserted in the inner hole of the bearing 331, such the support plate 32 can be rotatably mounted with the base plate 21 of the housing 20. It should be noted that, no matter the bottom of the support plate 32 defines the spindle or the bearing 33, the bearing 331 is preferably defined at the middle of the support plate 32 to ensure the support plate 32 to rotate steadily.

In another exemplary embodiment, referring to FIGs. 2-3 and 6-7, the bearing 331 is mounted on the mounting plate 33, the bottom of the support plate 32 defines a spindle inserting into the inner hole of the bearing 331, and the end of the spindle connecting to the support plate 32 defines a resisting ring 40 protruding towards the side direction. It is to be understood that, as described above, the spindle is mounted in the inner hole of the bearing 331. So, if the spindle is directly and perpendicularly connected with the bottom of the support plate 32, the bottom of the support plate 32 would contract the end surface of the outer ring of the bearing 331 after the spindle matching with the bearing 331, such the rotational resistance of the support plate 32 is increased. Therefore, in the exemplary embodiment, the connecting end of the spindle and the support plate 32 defines the resisting ring 40. After the spindle on the support plate 32 is inserted in the inner hole of the bearing 331, the resisting ring 40 resists the end surface of inner ring of the bearing 331 to put up the support plate 32, as such the bottom of the support plate 32 is separated from the end surface of the outer ring of the bearing 331.

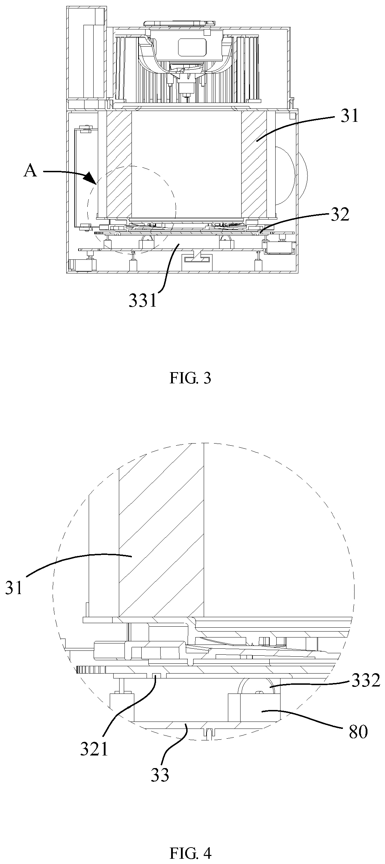

In a further exemplary embodiment, referring to FIGs. 3, 5 and 6, the bearing 331 is mounted on the mounting plate 33, the bottom of the support plate 32 defines a spindle inserting the inner hole of the bearing 331, a connecting portion of the spindle and the support plate 32 has a chamfer structure. It should be understood that, as described above, the spindle is mounted in the inner hole of the bearing 331. So, if the spindle is directly and perpendicularly connected with the bottom of the support plate 32, the bottom of the support plate 32 would contract the end surface of the outer ring of the bearing 331 after the spindle matching with the bearing 331, such the rotational resistance of the support plate 32 is increased. Therefore, in the exemplary embodiment, the connecting portion of the spindle and the support plate 32 is set to have the chamfer structure, that is, the connecting end of the spindle is gradually enlarged. After the spindle is inserted in the inner hole of the bearing 331, the gradually enlarged portion of the spindle can put up the support plate 32, as such the bottom of the support plate 32 is separated from the end surface of the outer ring of the bearing 331. Preferably, the chamfer structure has a circular chamfer.

In another preferable exemplary embodiment, referring to FIGs. 3-4, at least one guide pulley 332 is mounted on the mounting plate 33, the guide pulley 332 resists the bottom of the support plate 32. It is to be understood that, the mounting plate 33 defines the guide pulley 332, such the support plate 32 can be supported by the guide pulley 332, to ensure that the support plate 32 can rotate steadily during the rotating process, thus less noise is generated. And the rolling direction of the guide pulley 332 is consistent with the rotating direction of the support plate 32, such the guide pulley can not only support the support plate 32, but also play a function of guiding. The guide pulley 332 can be directly mounted on the mounting plate 33, or mounted on the mounting plate 33 through the a support element. The mounting mode of mounting the guide pulley 332 on the mounting plate 33 directly can be that: the mounting plate 33 defines a receiving groove, the guide pulley 332 is received in the receiving groove through the spindle. It should be noted that, when there are a plurality of guide pulleys 332, preferably, the plurality of guide pulleys 332 are uniformly arranged along the circumferential direction of the support plate 32. It should also be noted that, the guide pulley 332 can also be mounted on the mounting plate, and the guide pulley 332 resists the mounting plate 33. In addition, the guide pulley 332 can be a spherical roller, a drum-type roller, an annular roller, or a flat pulley.

Furthermore, the guide pulley 332 is the flat pulley, and the axis of the guide pulley 332 extends along the radial direction of the support plate 32. In the exemplary embodiment, the guide pulley 332 is set to be the flat pulley, and the guide pulley 332 is mounted on the mounting plate 33 through a mounting base 80. In detail, the mounting plate 33 defines the mounting base 80, the mounting base 80 is internally provided with the bearing, and two sides of the flat pulley define a spindle, then the flat pulley is rotatably connected with the mounting base 80 through the flat pulley and the spindle. It is to be understood that, during the rotating process of the guide pulley 332, there is a friction between the guide pulley 332 and the support plate 32, therefore, the guide pulley 332 in the exemplary embodiment is set to be the flat pulley, which aims to reduce the contracting area of the guide pulley 332 and the support plate 32, and the friction between the guide pulley 332 and the support plate 32 is decreased. In addition, the axis of the guide pulley is set to extend along the radial direction of the support plate 32, thus it is convenient for the guide pulley 332 to slide on the support plate 32.

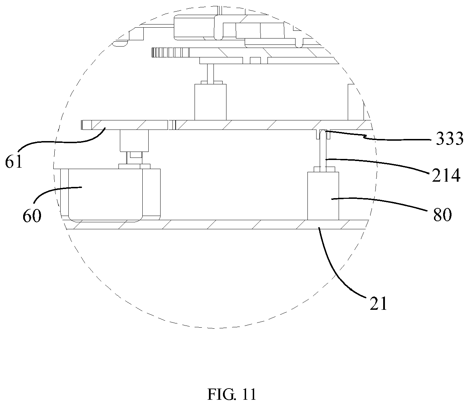

In another exemplary embodiment, referring to FIGs. 3-4, 10 and 11, the bottom of the support plate 32 defines a first guide groove 321 matching to the guide pulley 332, and the first guide groove 321 is arranged along the circumferential direction of the support plate 32. It is to be understood that, the bottom of the support plate 32 defines the first guide groove 321, the first guide groove 321 extends along the circumferential direction of the support plate 32, that is, the first guide groove 321 has an annular structure arranged on the bottom of the support plate 32. Furthermore, during the rotating process, the support plate 32 can steadily rotate along the circumferential direction through the matching of the guide pulley 332 and the first guide groove 321, and less noise is generated.

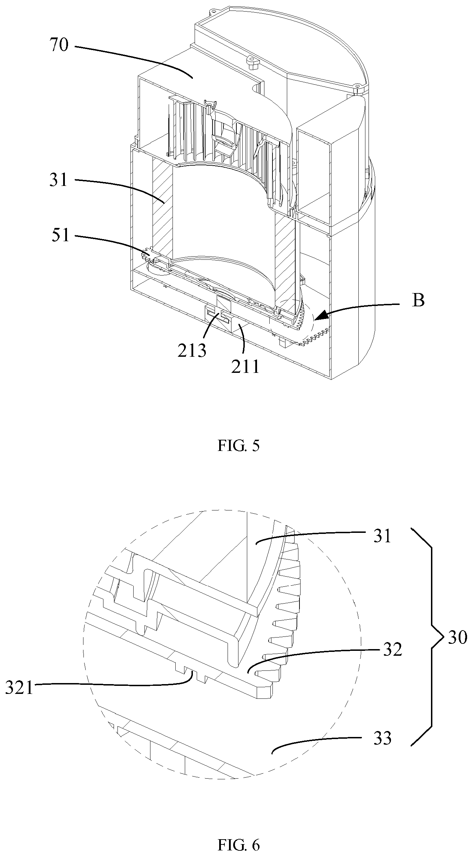

In another preferable exemplary embodiment, referring to FIGs. 3 and 6, the guide pulley 332 is a gear wheel, the bottom of the first guide groove 321 defines a rack engaged with the guide pulley 332. It is to be understood that, in the exemplary embodiment, the guide pulley 332 is set to be the gear wheel to match with the rack in the first guide groove 321, such the support plate 32 is driven to rotate steadily, furthermore, less noise is generated. The gear wheel can be a straight gear wheel, a herringbone gear wheel, or a one-way gear wheel, etc. It is to be noted that, the bottom of the first guide groove 321 is configured to resist the bottom of a roller 214.

In another preferable exemplary embodiment, referring to FIG. 2, the periphery of the support plate 33 defines a rack, a first driving motor 51 is mounted on the mounting plate 33, a shaft of the driving motor 50 is provided with a first driving gear 51, the first driving gear 51 engages with the rack of the support plate 32.

In detail, the driving motor 50 is mounted on the mounting plate 33, and located at the periphery of the support plate 32. The shaft of the driving motor 50 is provided with the first driving gear 51, the first driving gear 51 engages with the rack of the support plate 32. When the first driving motor 50 works, the support plate 32 rotates under the driving of the first driving gear 51, to realize the effect of that the support plate 32 is automatically controlled to rotate.

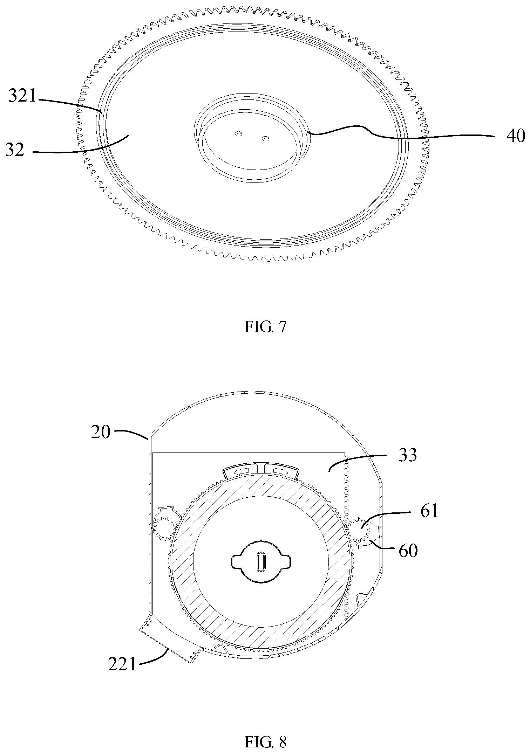

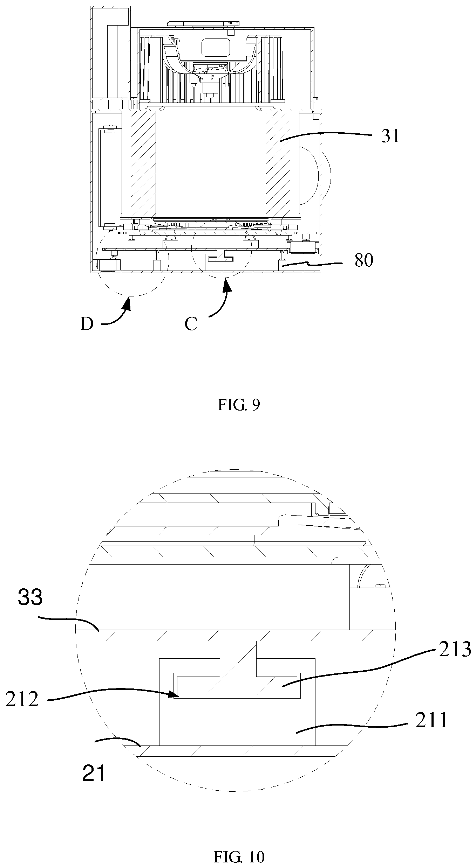

Referring to FIGs. 8 and 10, in another exemplary embodiment, the base plate 21 of the housing 20 defines a connecting block 211, the connecting block 211 defines a sliding groove 212, the bottom of the mounting plate 33 defines a protruding rail 213 matching to the sliding groove 212. If the sliding groove 212 is directly formed in the base plate 21 of the housing 20, the whole base plate 21 should be set to have a large thickness, causing a waste of material and improving the difficulty for manufacturing the base plate 21. Therefore, in the exemplary embodiment, the base plate 21 defines the connecting block 211, and then the connecting block 211 can directly match with the sliding groove 212.

In another exemplary embodiment, referring to FIGs. 8-11, the base plate 21 of the housing 20 defines the roller 214, the roller 214 resists the bottom of the mounting plate 33. It should be understood that, the base plate 21 of the housing 20 defines the roller 214, then the roller 214 can support the support plate 32 to ensure the support plate rotate steadily during the rotating process, and less noise is generated. Of course, during the process of the roller 214 sliding on the mounting plate 33, the rolling direction of the roller 214 is consistent with the sliding direction of the mounting plate 33. the roller 214 can be a spherical roller 214, a drum-type roller 214, an annular roller 214, or a flat roller 214. It should be noted that, the roller 214 is directly mounted on the base plate 21, or mounted on the base plate 21 through a supporter. The mode of directly mounting roller 214 on the base plate 21 can be that: the base plate 21 defines a receiving groove, the roller 214 is received in the receiving groove through the spindle. It should also be noted that, the roller 214 can be defined on the mounting plate, and the roller 214 resists the base plate 21 of the housing 20.

Furthermore, there are a plurality of rollers 214 which are uniformly arranged at two sides of the sliding groove 212. It should be understood that, the plurality of rollers 214 are respectively defined at two sides of the sliding groove 212 to guide and support the mounting plate 33, thus the mounting plate 33 can slide steadily during the sliding process. The rollers 214 at the same side of the sliding groove 212 are arranged in line, or in dislocation mode.

In another exemplary embodiment, referring to FIGs. 8-11, the roller 214 is a flat roller, and the roller 214 is mounted to the base plate 21 through a mounting base 80. In detail, the base plate 21 of the housing 20 mounts a plurality of mounting bases 80, the mounting base 80 is internally provided with a bearing. Similarly, two sides of the flat roller both defines a spindle, the flat roller can be rotatably connected with the mounting base through the spindle. It is to be understood that, during the rotating process of the roller 214, there is a friction between the roller 214 and the support plate 32, therefore, the roller 214 in the exemplary embodiment is set to be the flat roller, which aims to reduce the contracting area of the roller 214 and the support plate 32.

In another exemplary embodiment, referring to FIGs. 10-11, the roller 214 is a gear wheel, and the bottom of the mounting plate 33 defines a rack engaged with the roller 214. It should be understood that, in the exemplary embodiment, the roller 214 is set to be the gear wheel to match with rack defined on the bottom of the mounting plate 33, thus the mounting plate 33 can be driven to slide much more steadily, and less noise is generated.

Furthermore, the bottom of the mounting plate 33 defines a second guide groove 333, the rack is defined at the bottom of the second guide groove 333. It is to be understood that, based on the previous exemplary embodiment, the rack is mounted in the guide groove, during the rotating process of the roller 214 engaging with the rack, the wall of the guide groove can limit the position of the rack, further preventing the mounting plate 33 from shifting in the moving process, so as to improve the stability of the mounting plate 33 when sliding. It is to be noted that, the bottom surface of the guide groove resisting the roller 214 can be regarded as the bottom of the groove.

In another preferable exemplary embodiment, referring to FIGs. 8-11, the mounting plate 33 includes side edges located at two sides of the protruding rail 213, one of the side edges of the mounting plate 33 defines a rack, the base plate 21 of the housing 20 is provided with a second driving motor 60, a shaft of the second driving motor 60 is provided with a second driving gear 61, the second driving gear 61 engages with the rack on the mounting plate 33.

In detail, the bottom of the mounting plate 33 defines the protruding rail 213, and the mounting plate 33 has two side edges respectively located at two sides of the protruding rail 213 (the two side edges extend along the length direction of the protruding rail 213), any one of the side edges of the mounting plate 33 defines the rack. In addition, the base plate 21 of the housing 20 is provided with the second driving motor 60, and the second driving motor 60 is adjacent to the side edge (the side edge having the rack) of the mounting plate 33. The drive shaft of the second driving motor 60 defines the second driving gear 61, the second driving gear 61 engages with the rack on the mounting plate 33. When the second driving motor 60 works, the mounting plate 33 slides out of the housing 20 under the driving of the protruding rail 213, the sliding groove 212, and the second driving gear 61, to realize the effect of that the support plate 32 is automatically controlled to slide.

The foregoing description merely depicts some embodiments of the present invention and therefore is not intended to limit the scope of the invention which is solely defined in the appended claims.

## Claims

1. An air processing module (10), suitable for being applied to an air conditioner, wherein, the air processing module (10) comprises:
a housing (20), comprising a base plate (21) and a coaming (22) formed by a periphery of the base plate (21) extending upwardly, the coaming (22) comprises an air inlet (221); and
an air processing assembly (30), mounted in the housing (20), the air processing assembly (30) comprises a filter canister (31), a support plate (32), and a mounting plate (33), the filter canister (31) is detachably mounted to the support plate (32), the support plate (32) is rotatably mounted to the mounting plate (33), the mounting plate (33) is slidably mounted in the housing (20) along the inside and the outside of the air inlet (221).

2. The air processing module according to claim 1, wherein, the support plate (32) is rotatably mounted to the mounting plate (33) through a bearing (331).

3. The air processing module according to claim 2, wherein, the bearing (331) is mounted to the mounting plate (33), a bottom of the support plate (32) comprises a spindle passing through an inner hole of the bearing (331), and the end of the spindle connecting to the support plate (32) comprises a resisting ring (40) protruding towards the side direction.

4. The air processing module according to claim 2, wherein, at least one guide pulley (332) is mounted on the mounting plate (33), the guide pulley (332) resists the bottom of the support plate (32).

5. The air processing module according to claim 4, wherein, the guide pulley (332) is a flat pulley, and the axis of the guide pulley (332) extends along the radial direction of the support plate (32).

6. The air processing module according to claim 4, wherein, the bottom of the support plate (32) comprises a first guide groove (321) matching to the guide pulley (332), and the first guide groove (321) is arranged along the circumferential direction of the support plate (32).

7. The air processing module according to claim 6, wherein, the guide pulley (332) is a gear wheel, the bottom of the first guide groove (321) comprises a rack engaged with the guide pulley (332).

8. The air processing module according to claim 2, wherein, a periphery of the support plate (32) comprises a rack, a first driving motor (50) is mounted on the mounting plate (33), a shaft of the first driving motor (50) is provided with a first driving gear (51), the first driving gear (51) engages with the rack of the support plate (32).

9. The air processing module according to claim 1, wherein, the mounting plate (33) is mounted on the base plate (21), and the mounting plate (33) matches to the base plate (21) through slot rail fit.

10. The air processing module according to claim 9, wherein, the base plate (21) of the housing (20) comprises a connecting block (211), the connecting block (211) comprises a sliding groove (212), the bottom of the mounting plate (33) comprises a protruding rail (213) matching to the sliding groove (212).

11. The air processing module according to claim 10, wherein, the base plate (21) of the housing (20) comprises a roller (214), the roller (214) resists the bottom of the mounting plate (33).

12. The air processing module according to claim 11, comprising
a plurality of rollers (214) which are uniformly arranged at two sides of the sliding groove (212); and / or
wherein, the roller (214) is a flat roller, and the roller (214) is mounted to the base plate (21) through a mounting base (80); or
wherein, the roller (214) is a gear wheel, and the bottom of the mounting plate (33) comprises a rack engaged with the roller (214).

13. The air processing module according to claim 12, wherein when the roller (214) is a gear wheel, the bottom of the mounting plate (33) comprises a second guide groove (333), the rack is defined at the bottom of the second guide groove (333).

14. The air processing module according to claim 10, wherein, the mounting plate (33) comprises side edges located at two sides of the protruding rail (213), the two side edges extending along the length direction of the protruding rail (213), one of the side edges of the mounting plate (33) comprises a rack, the base plate (21) of the housing (20) is provided with a second driving motor (60), a shaft of the second driving motor (60) is provided with a second driving gear (61), the second driving gear (61) engages with the rack on the mounting plate (33).

15. An air conditioner, comprising an indoor unit and an outdoor unit, wherein, the air conditioner further comprises an air processing module (10) as claimed in any one of claims 1, 2, 9 or claim 12 in combination with a plurality of rollers (214), and wherein the air processing module (10) is mounted to the indoor unit and/or the outdoor unit.

## Patentansprüche

1. Luftverarbeitungsmodul (10), geeignet zur Anwendung bei einer Klimaanlage, wobei das Luftverarbeitungsmodul (10) Folgendes umfasst:
ein Gehäuse (20), umfassend eine Grundplatte (21) und einen Süll (22), der durch einen sich nach oben erstreckenden Umfang der Grundplatte (21) gebildet ist, wobei der Süll (22) einen Lufteinlass (221) umfasst; und
eine in dem Gehäuse (20) montierte Luftverarbeitungsanordnung (30), wobei die Luftverarbeitungsanordnung (30) einen Filterkanister (31), eine Stützplatte (32) und eine Montageplatte (33) umfasst, der Filterkanister (31) lösbar an der Stützplatte (32) montiert ist, die Stützplatte (32) drehbar an der Montageplatte montiert (33) ist, die Montageplatte (33) verschiebbar in dem Gehäuse (20) entlang der Innenseite und der Außenseite des Lufteinlasses (221) montiert ist.

2. Luftverarbeitungsmodul gemäß Anspruch 1, wobei die Stützplatte (32) über ein Lager (331) drehbar an der Montageplatte (33) montiert ist.

3. Luftverarbeitungsmodul gemäß Anspruch 2, wobei das Lager (331) an der Montageplatte (33) montiert ist, ein Boden der Stützplatte (32) eine Spindel umfasst, die durch ein Innenloch des Lagers (331) hindurchgeht, und das Ende der mit der Stützplatte (32) verbundenen Spindel einen Widerstandsring (40) umfasst, der in seitlicher Richtung vorsteht.

4. Luftverarbeitungsmodul gemäß Anspruch 2, wobei mindestens eine Führungsrolle (332) auf der Montageplatte (33) montiert ist, wobei die Führungsrolle (332) der Unterseite der Stützplatte (32) Widerstand leistet.

5. Luftverarbeitungsmodul gemäß Anspruch 4, wobei die Führungsrolle (332) eine flache Riemenscheibe ist und sich die Achse der Führungsrolle (332) entlang der radialen Richtung der Stützplatte (32) erstreckt.

6. Luftverarbeitungsmodul gemäß Anspruch 4, wobei der Boden der Stützplatte (32) eine erste Führungsnut (321) umfasst, die zu der Führungsrrolle (332) passt, und die erste Führungsnut (321) entlang der Umfangsrichtung der Stützplatte (32) angeordnet ist.

7. Luftverarbeitungsmodul gemäß Anspruch 6, wobei die Führungsrolle (332) ein Zahnrad ist, der Boden der ersten Führungsnut (321) eine Zahnstange umfasst, die mit der Führungsrolle (332) in Eingriff steht.

8. Luftverarbeitungsmodul gemäß Anspruch 2, wobei ein Umfang der Stützplatte (32) eine Zahnstange umfasst, ein erster Antriebsmotor (50) auf der Montageplatte (33) montiert ist, eine Welle des ersten Antriebsmotors (50) mit einem ersten Antriebszahnrad (51) versehen ist, das erste Antriebszahnrad (51) in die Zahnstange der Stützplatte (32) eingreift.

9. Luftverarbeitungsmodul gemäß Anspruch 1, wobei die Montageplatte (33) auf der Grundplatte (21) montiert ist und die Montageplatte (33) durch Schlitzschienenpassung zu der Grundplatte (21) passt.

10. Luftverarbeitungsmodul gemäß Anspruch 9, wobei die Grundplatte (21) des Gehäuses (20) einen Verbindungsblock (211) umfasst, der Verbindungsblock (211) eine Gleitnut (212) umfasst, der Boden der Montageplatte (33) eine vorstehende Schiene (213) umfasst, die zu der Gleitnut (212) passt.

11. Luftverarbeitungsmodul gemäß Anspruch 10, wobei die Grundplatte (21) des Gehäuses (20) eine Walze (214) umfasst, wobei die Walze (214) der Unterseite der Montageplatte (33) Widerstand leistet.

12. Luftverarbeitungsmodul gemäß Anspruch 11, umfassend eine Vielzahl von Walzen (214), die gleichmäßig an zwei Seiten der Gleitnut (212) angeordnet sind; und/oder
wobei die Walze (214) eine flache Walze ist und die Walze (214) an der Grundplatte (21) durch eine Montagebasis (80) montiert ist; oder
wobei die Walze (214) ein Zahnrad ist und die Unterseite der Montageplatte (33) eine mit der Walze (214) in Eingriff stehende Zahnstange umfasst.

13. Luftverarbeitungsmodul gemäß Anspruch 12, wobei, wenn die Walze (214) ein Zahnrad ist, der Boden der Montageplatte (33) eine zweite Führungsnut (333) umfasst, die Zahnstange am Boden der zweiten Führungsnut (333) definiert ist.

14. Luftverarbeitungsmodul gemäß Anspruch 10, wobei die Montageplatte (33) Seitenkanten umfasst, die an zwei Seiten der vorstehenden Schiene (213) angeordnet sind, die zwei Seitenkanten sich entlang der Längsrichtung der vorstehenden Schiene (213) erstrecken, eine der Seitenkanten der Montageplatte (33) eine Zahnstange umfasst, die Grundplatte (21) des Gehäuses (20) mit einem zweiten Antriebsmotor (60) versehen ist, eine Welle des zweiten Antriebsmotors (60) mit einem zweiten Antriebszahnrad (61) versehen ist, das zweite Antriebszahnrad (61) mit der Zahnstange auf der Montageplatte (33) in Eingriff steht.

15. Klimaanlage, umfassend eine Inneneinheit und eine Außeneinheit, wobei die Klimaanlage ferner ein Luftverarbeitungsmodul (10) gemäß einem der Ansprüche 1, 2, 9 oder Anspruch 12 in Kombination mit einer Vielzahl von Walzen (214) umfasst, und wobei das Luftverarbeitungsmodul (10) an der Inneneinheit und/oder der Außeneinheit montiert ist.

## Revendications

1. Module de traitement d'air (10) adapté pour être appliqué à un climatiseur, dans lequel le module de traitement d'air (10) comprend :
un boîtier (20) comprenant une plaque de base (21) et une hiloire (22) formée par une périphérie de la plaque de base (21) s'étendant vers le haut, la hiloire (22) comprenant une entrée d'air (221) ; et
un ensemble de traitement d'air (30) monté dans le boîtier (20), l'ensemble de traitement d'air (30) comprenant une cartouche filtrante (31), une plaque de support (32) et une plaque de montage (33), la cartouche filtrante (31) étant montée de façon détachable sur la plaque de support (32), la plaque de support (32) étant montée de façon rotative sur la plaque de montage (33), le plaque de montage (33) étant montée de façon coulissante dans le boîtier (20) le long de l'intérieur et de l'extérieur de l'entrée d'air (221).

2. Module de traitement d'air selon la revendication 1, dans lequel la plaque de support (32) est montée de façon rotative sur la plaque de montage (33) par le biais d'un palier (331).

3. Module de traitement d'air selon la revendication 2, dans lequel le palier (331) est monté sur la plaque de montage (33), une partie inférieure de la plaque de support (32) comprend une broche traversant un trou intérieur du palier (331), et l'extrémité de la broche reliée à la plaque de support (32) comprend un anneau résistant (40) faisant saillie vers la direction latérale.

4. Module de traitement d'air selon la revendication 2, dans lequel au moins une poulie de guidage (332) est montée sur la plaque de montage (33), la poulie de guidage (332) résistant à la partie inférieure de la plaque de support (32).

5. Module de traitement d'air selon la revendication 4, dans lequel la poulie de guidage (332) est une poulie plate, et l'axe de la poulie de guidage (332) s'étend le long de la direction radiale de la plaque de support (32).

6. Module de traitement d'air selon la revendication 4, dans lequel la partie inférieure de la plaque de support (32) comprend une première rainure de guidage (321) correspondant à la poulie de guidage (332), et la première rainure de guidage (321) est disposée le long de la direction circonférentielle de la plaque de support (32).

7. Module de traitement d'air selon la revendication 6, dans lequel la poulie de guidage (332) est une roue d'engrenage, la partie inférieure de la première rainure de guidage (321) comprenant une crémaillère engagée avec la poulie de guidage (332).

8. Module de traitement d'air selon la revendication 2, dans lequel une périphérie de la plaque de support (32) comprend une crémaillère, un premier moteur d'entraînement (50) est monté sur la plaque de montage (33), un arbre du premier moteur d'entraînement (50) est doté d'une première roue menante (51), la première roue menante (51) s'engageant avec la crémaillère de la plaque de support (32).

9. Module de traitement d'air selon la revendication 1, dans lequel la plaque de montage (33) est montée sur la plaque de base (21), et la plaque de montage (33) correspond à la plaque de base (21) par le biais d'un ajustement de rail à fente.

10. Module de traitement d'air selon la revendication 9, dans lequel la plaque de base (21) du boîtier (20) comprend un bloc d'assemblage (211), le bloc d'assemblage (211) comprend une rainure de coulissement (212), la partie inférieure de la plaque de montage (33) comprenant un rail saillant (213) correspondant à la rainure de coulissement (212).

11. Module de traitement d'air selon la revendication 10, dans lequel la plaque de base (21) du boîtier (20) comprend un galet (214), le galet (214) résistant à la partie inférieure de la plaque de montage (33).

12. Module de traitement d'air selon la revendication 11, comprenant une pluralité de galets (214) disposés uniformément sur deux côtés de la rainure de coulissement (212) ; et/ou
dans lequel le galet (214) est un galet plat, et le galet (214) est monté sur la plaque de base (21) par le biais d'une base de montage (80) ; ou
dans lequel le galet (214) est une roue d'engrenage, et la partie inférieure de la plaque de montage (33) comprend une crémaillère engagée avec le galet (214).

13. Module de traitement d'air selon la revendication 12, dans lequel, lorsque le galet (214) est une roue d'engrenage, la partie inférieure de la plaque de montage (33) comprend une deuxième rainure de guidage (333), la crémaillère étant définie au niveau de la partie inférieure de la deuxième rainure de guidage (333).

14. Module de traitement d'air selon la revendication 10, dans lequel la plaque de montage (33) comprend des bords latéraux situés sur deux côtés du rail saillant (213), les deux bords latéraux s'étendant le long de la direction longitudinale du rail saillant (213), l'un des bords latéraux de la plaque de montage (33) comprend une crémaillère, la plaque de base (21) du boîtier (20) est dotée d'un deuxième moteur d'entraînement (60), un arbre du deuxième moteur d'entraînement (60) est doté d'une deuxième roue menante (61), la deuxième roue menante (61) s'engageant avec la crémaillère sur la plaque de montage (33).

15. Climatiseur, comprenant une unité intérieure et une unité extérieure, dans lequel le climatiseur comprend en outre un module de traitement d'air (10) selon l'une quelconque des revendications 1, 2, 9 ou 12 en combinaison avec une pluralité de galets (214), et dans lequel le module de traitement d'air (10) est monté sur l'unité intérieure et/ou sur l'unité extérieure.
